# FASCICULE DE BREVET EUROPEEN

(11) **EP 1 168 242 B1**
(45) Date de publication et mention de la délivrance du brevet: **07.05.2008**
(21) Numéro de dépôt: 01202306.5
(22) Date de dépôt: 15.06.2001
(51) Int. Cl.: G06T 1/60

(54) **Dispositif de traitement de données**
Datenverarbeitungsgerät
Data processing device

(30) Priorité: 20.06.2000 FR 0007865
(43) Date de publication de la demande: 02.01.2002
(73) Titulaire: NXP B.V., 5656 AG Eindhoven (NL)
(72) Inventeur: Duboc, Jean-Francois, 75008 Paris (FR); Barnas, Saïda, 75008 Paris (FR)
(74) Mandataire: van der Veer, Johannis Leendert

(56) Documents cités:
- US-A- 4 358 826
- US-A- 4 739 473
- US-A- 4 785 393
- US-A- 5 897 665

## Description

### DOMAINE TECHNIQUE

L'invention concerne un dispositif de traitement de données comprenant une pluralité de circuits de traitement et un ensemble d'éléments de stockage pour stocker temporairement des données destinées aux circuits de traitement. L'invention peut-être appliquée, par exemple, dans un processeur de signaux numériques capable d'effectuer un filtrage FIR (FIR est l'abréviation de l'expression anglaise Finite Impulse Response).

### ETAT DE LA TECHNIQUE ANTERIEURE

Il est possible d'implémenter un dispositif de traitement de données tel que défini dans le préambule de la façon suivante. L'ensemble d'éléments de stockage constitue un banc de registres auquel chaque circuit de traitement a accès. Chaque élément de stockage (registre) est destiné à contenir une donnée. Une donnée est appliquée à un circuit de traitement au moyen d'un circuit de sélection. Ce circuit de sélection sélectionne, à partir d'un mot de contrôle, un élément de stockage. La donnée contenue dans cet élément de stockage sélectionné est appliquée au circuit de traitement concerné.

US-A-5 897 665 décrit une architecture de microprocesseur qui utilise un fichier de registres à 64 octets de la façon suivante. Les 16 octets les plus bas du fichier de registres peuvent être accédés comme 16 registres à 8 bits. Les 32 octets les plus bas du fichier de registres peuvent être accédés comme 16 registres à 32 bits (constituant un mot). L'ensemble du fichier de registres peut être accédé comme 16 registres à 64 bits (constituant un double mot).

US-A-4 785 393 décrit une unité arithmétique-logique (ALU) capable d'effectuer des opérations complexes sur un, deux, trois ou quatre octets sélectionnés d'un opérande ou des bits contigus sélectionnés d'un opérande. L'ALU a trois entrées à 32 bits consistant en deux opérandes, chacun comprenant un mot de données, et un masque. Les opérandes peuvent être simultanément reçus, décalés, masqués, et combinés, ainsi qu'un résultat à la sortie de l'ALU, dans un seul cycle d'instruction.

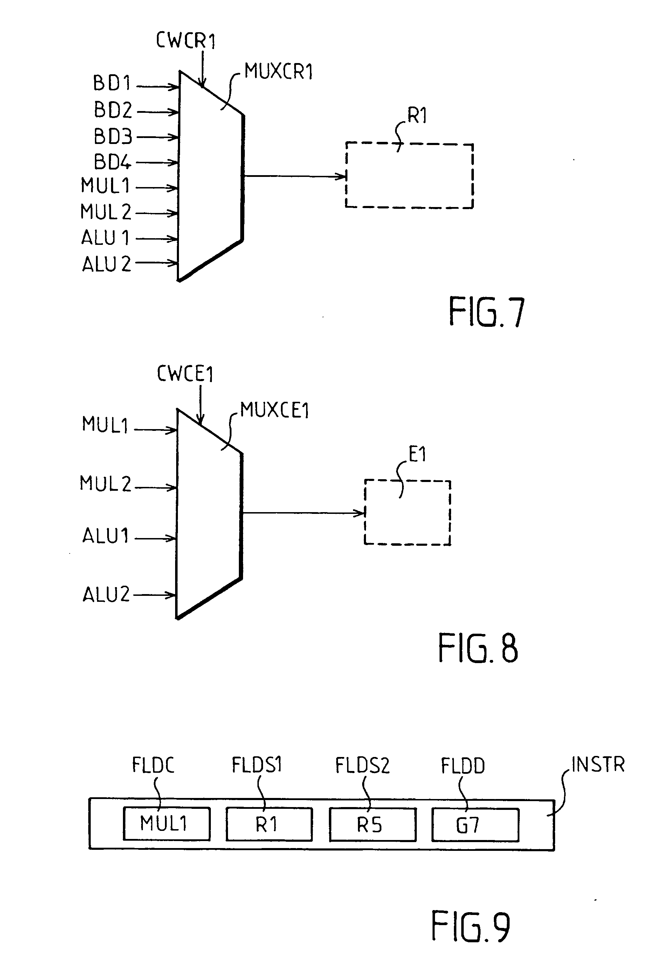

Le livre intitulé « Image Processing » par Don Pearson, édité par Mc Graw-Hill Book Company, 1991, ISBN 0-07-707323-1, décrit au chapitre 8 des architectures pour le traitement d'images. Une architecture appelée « TAAC » est illustrée à la figure 8.6. L'architecture est adressée comme une matrice de 1024 x 2048 pixels, chaque pixel correspondant à 32 bits. L'architecture TAAC comprend différents types de circuits de traitement qui sont conjointement reliés à une mémoire de travail / mémoire de pile (scratchpad/stack memory) par l'intermédiaire d'un seul processeur d'accès.

### EXPOSE DE L'INVENTION

Un but de l'invention est de permettre une réduction de coûts.

Selon l'invention, un dispositif de traitement de données tel que défini dans le préambule comprend des caractéristiques telles que définies à la revendication 1.

L'invention prend les aspects suivants en considération. Il existe des applications où un certain type de donnée doit subir un certain traitement tandis qu'un autre type de donnée doit subir un autre traitement. Les différents types de données n'ont pas forcément la même taille. Un exemple d'une telle application est un filtrage FIR selon la norme de téléphonie mobile GSM. Dans une telle application, les données d'entrée et les coefficients de filtrage comprennent 16 bits. Ces données sont destinées à être multipliées afin d'obtenir des données d'entrée pondérées. Ces dernières données sont destinées à être additionnées et comprennent 32 bits ou même 36 ou 40 après avoir été additionnées.

Selon l'art antérieur, chaque élément de stockage (registre) est destiné à contenir une donnée entière. Par conséquent, la donnée la plus large déterminera la taille des éléments de stockage. Par exemple, la taille des éléments de stockage sera 32 bits dans une application telle que décrit précédemment. Une donnée d'entrée de 16 bits, sera donc stockée dans un élément de stockage de 32 bits. Ceci est également vrai pour un coefficient de filtrage de 16 bits. Par conséquent, un élément de stockage contenant une donnée d'entrée ou un coefficient de filtrage contiendra des bits de bourrages, par exemples des zéros (0), pour faire l'extension de 32 bits. Par conséquent, l'ensemble des éléments de stockage selon l'art antérieur sera utilisé d'une façon peu efficace dans une application telle que décrit précédemment.

Le principe suivant permet d'utiliser l'ensemble des éléments de stockage d'une façon plus efficace. Certains éléments de stockage sont réservés pour un certain type de données tandis que d'autres éléments de stockage sont réservés pour un autre type de données. Selon ce principe, il y aura deux sous-ensembles d'éléments de stockage différents dans une application tel que décrit précédemment. Il y aura un sous-ensemble d'éléments de stockage de 16 bits pour stocker les données d'entrée et les coefficients de filtrage. Il y aura un autre sous-ensemble d'éléments de stockage de 32 bits pour stocker les données d'entrée pondérées et les cumuls de celles-ci.

Au cours d'un traitement de données, il est possible que, pendant un certain intervalle de temps, il y ait relativement beaucoup de données d'un certain type à stocker et relativement peu de données d'un autre type. L'inverse peut être vrai dans un autre intervalle de temps. Par conséquent, si le principe décrit précédemment est appliqué, il faudra que chaque sous-ensemble d'éléments de stockage comprenne un nombre d'éléments de stockage suffisant. Par conséquent, il faudra relativement beaucoup d'éléments de stockage, ce qui est coûteux, et ces éléments de stockage seront utilisés d'une façon peu efficace.

L'invention telle que définie aux revendications permet d'utiliser un élément de stockage pour stocker une donnée de petite taille en entier mais aussi pour stocker une partie d'une donnée de grande taille. Dans le dernier cas, les autres parties de la donnée seront stockées dans les autres éléments de stockage appartenant au même groupe. L'invention permet donc à un ou plusieurs éléments de stockage de stocker n'importe quel type de donnée sans l'utilisation de bits de bourrage. Par conséquent, l'invention permet une utilisation flexible et efficace de l'ensemble d'éléments de stockage. Par conséquent, l'invention permet le stockage des données à traiter, ainsi que les résultats intermédiaires et finals, avec relativement peu d'éléments de stockage. Par conséquent, l'invention permet une réduction de coûts.

Ces aspects de l'invention ainsi que d'autres aspects seront décrits plus en détail par référence à des figures.

### BREVE DESCRIPTION DES FIGURES

La Figure 1 est un diagramme conceptuel illustrant des caractéristiques de base décrites précédemment;
La Figure 2 est un diagramme bloc illustrant un processeur de signaux numériques;
La Figure 3 est un diagramme bloc illustrant un ensemble d'éléments de stockage qui font partie du processeur de signaux numériques;
La Figure 4 est un diagramme bloc illustrant deux multiplexeurs registres/multiplicateur qui font partie du processeur de signaux numériques;
La Figure 5 est un diagramme bloc illustrant deux multiplexeurs groupes/unité qui font partie du processeur de signaux numériques;
La Figure 6 est un diagramme bloc illustrant un premier multiplexeur registre/bus qui fait partie du processeur de signaux numériques;
La Figure 7 est un diagramme bloc illustrant un premier multiplexeur circuits/registre qui fait partie du processeur de signaux numériques;
La Figure 8 est un diagramme bloc illustrant un premier multiplexeur circuits/extension qui fait partie du processeur de signaux numériques; et
La Figure 9 est un diagramme bloc illustrant une instruction pour le processeur de signaux numériques.

### MODE DE REALISATION DE L'INVENTION

Les remarques suivantes concernent les signes de référence. Des entités similaires sont désignées par une référence par lettres identique dans toutes les Figures. Plusieurs entités similaires peuvent apparaître dans une seule Figure. Dans ce cas, un chiffre ou un suffixe est ajouté à la référence par lettres afin de distinguer des entités similaires. Le chiffre ou le suffixe peut être omis pour des raisons de convenance. Ceci s'applique pour la description ainsi que pour les revendications.

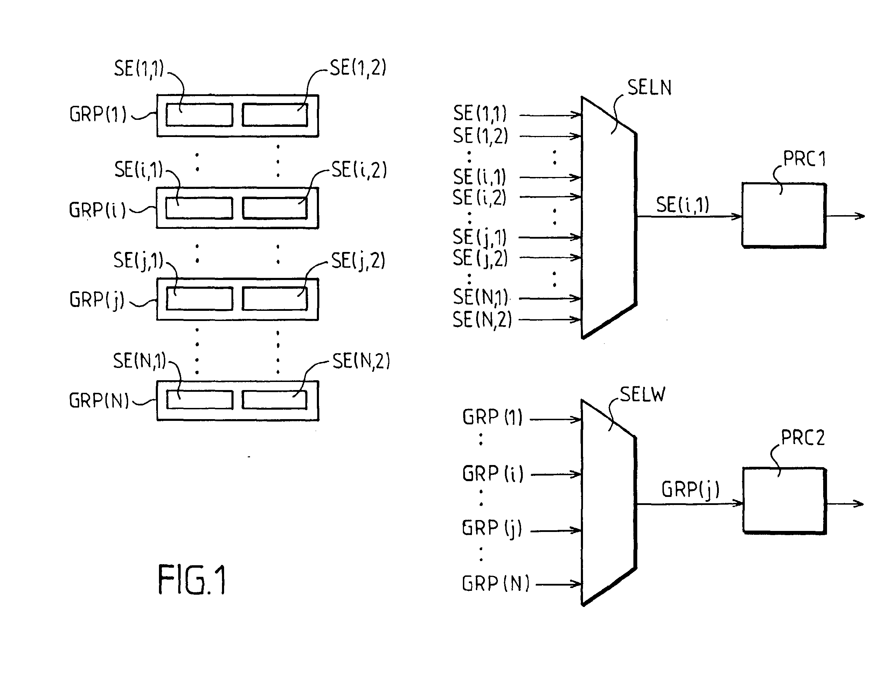

La Figure 1 illustre des caractéristiques de base décrites précédemment. Un dispositif de traitement de données comprend une pluralité de circuits de traitement [PRC]. Un ensemble d'éléments de stockage [SE] sert à stocker temporairement des données destinées aux circuits de traitement [PRC]. Un circuit de sélection étroite [SELN] permet de sélectionner un seul élément de stockage [SE(i,1)] parmi plusieurs éléments de stockage [SE(1,1), SE(1,2),... SE(N,1), SE(N,2)] afin d'appliquer le contenu de l'élément de stockage sélectionné [SE(i,1)] à une entrée d'un circuit de traitement [PRC1]. Un circuit de sélection large [SELW] permet de sélectionner un groupe d'éléments de stockage [GRP(j)] parmi plusieurs groupes d'éléments de stockage disjoints [GRP(1)-GRP(N)] afin d'appliquer l'ensemble des contenus des éléments de stockage [SE] faisant partie du groupe sélectionné [GRP(j)] à une entrée d'un autre circuit de traitement [PRC2].

Les caractéristiques illustrées à la Figure 1 peuvent être appliquées, par exemple, dans un processeur de signaux numérique capable d'effectuer un filtrage FIR. Un filtrage FIR consiste principalement à faire une combinaison pondérée de différentes données voisines. Par conséquent, un filtrage FIR entraîne des multiplications et des additions. Les multiplications servent à multiplier les données voisines concernées par des coefficients de pondération respectifs afin d'obtenir des données pondérées. Les additions servent à faire un cumul des données pondérées afin d'obtenir une donnée filtrée, c'est à dire, une donnée de sortie.

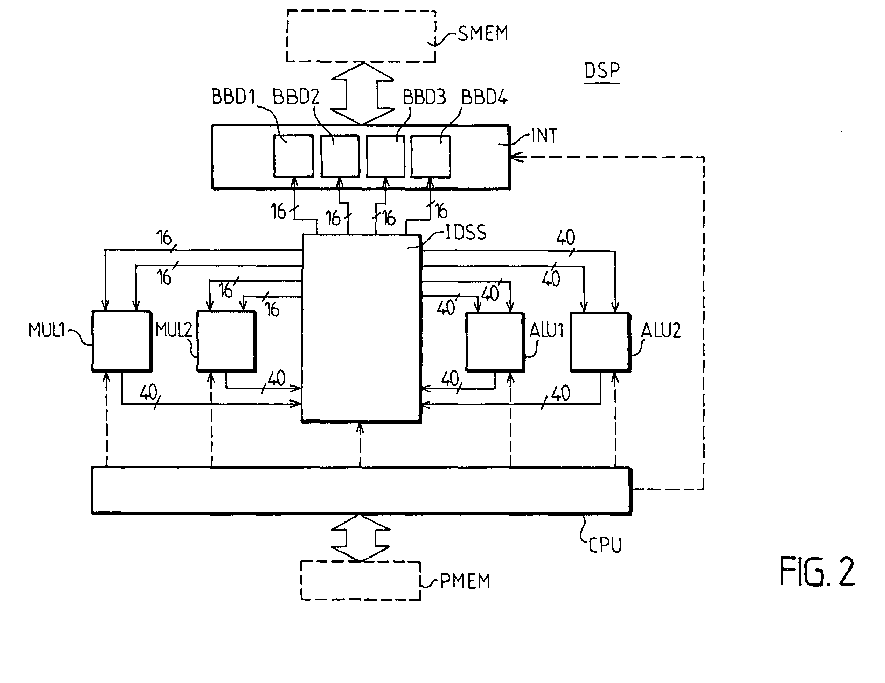

La Figure 2 illustre un processeur de signaux numériques capable d'effectuer un filtrage FIR. Le processeur de signaux numériques [DSP] comprend une interface [INT], un circuit de stockage et de sélection de données [IDSS], un circuit de contrôle [CPU], et quatre circuits de traitement: un premier multiplicateur [MUL1], un deuxième multiplicateur [MUL2], une première unité arithmétique et logique [ALU1] et une deuxième unité arithmétique et logique [ALU2]. L'interface [INT] comprend quatre circuits de bus bidirectionnel [BBD]. Un bus relie l'interface [INT] à une mémoire de données [SMEM] représentée par des tirets. Un autre bus relie le circuit de contrôle [CPU] à une mémoire de programme [PMEM] représentée également par des tirets. Un système de bus internes relie le circuit de stockage et de sélection de données [IDSS] aux quatre circuits de bus bidirectionnel [BBD] et aux quatre circuits de traitement [MUL1, MUL2, ALU1, ALU2]. Les bus internes sont représentés par des flèches auxquelles des chiffres sont associés. Un chiffre indique la largeur du bus concerné en nombre de bits.

Le processeur de signaux numériques [DSP] fonctionne globalement comme suit. L'interface [INT] transfère des données à traiter de la mémoire de données [SMEM] au circuit de stockage et de sélection de données [IDSS]. Le circuit de stockage et de sélection de données [IDSS] stocke ces données temporairement. Les quatre circuits de traitement [MUL1, MUL2, ALU1, ALU2] effectuent des opérations arithmétiques sur les données contenues dans le circuit de stockage et de sélection de données [IDSS] afin d'obtenir des données traitées. L'interface [INT] transfère les données traitées du circuit de stockage et de sélection de données [IDSS] à la mémoire de données [SMEM]. Par exemple, une donnée traitée peut être une combinaison pondérée de données contenues dans la mémoire de données [SMEM]. Pour faire une telle combinaison, les multiplicateurs [MUL] multiplient les données concernées par des facteurs de pondération respectifs et les unités arithmétique et logique [ALU] additionnent les données pondérées fournies par les multiplicateurs [MUL].

Les opérations décrites ci-dessus sont effectuées sous le contrôle du circuit de contrôle [CPU] à partir des instructions contenues dans la mémoire programme [PMEM]. Plus spécifiquement, le circuit de contrôle [CPU] lit des instructions de la mémoire de programme et les exécute. L'exécution d'une instruction entraîne la génération de mots de contrôles pour un ou plusieurs circuits du processeur de signaux numériques [DSP]. Par exemple, une instruction peut concerner la multiplication d'une donnée par un facteur de pondération avec le premier multiplicateur [MUL1] afin d'obtenir une donnée pondérée. Dans ce cas, le circuit de contrôle [CPU] génère des mots de contrôle pour le circuit de stockage et de sélection de données [IDSS] afin d'amener ce circuit: (1) à appliquer la donnée voulue à une entrée du premier multiplicateur [MUL1], (2) à appliquer le facteur de pondération à une autre entrée du premier multiplicateur [MUL1], et (3) à stocker la donnée pondérée fournie pas le premier multiplicateur [MUL1] dans un certain lieu de stockage interne.

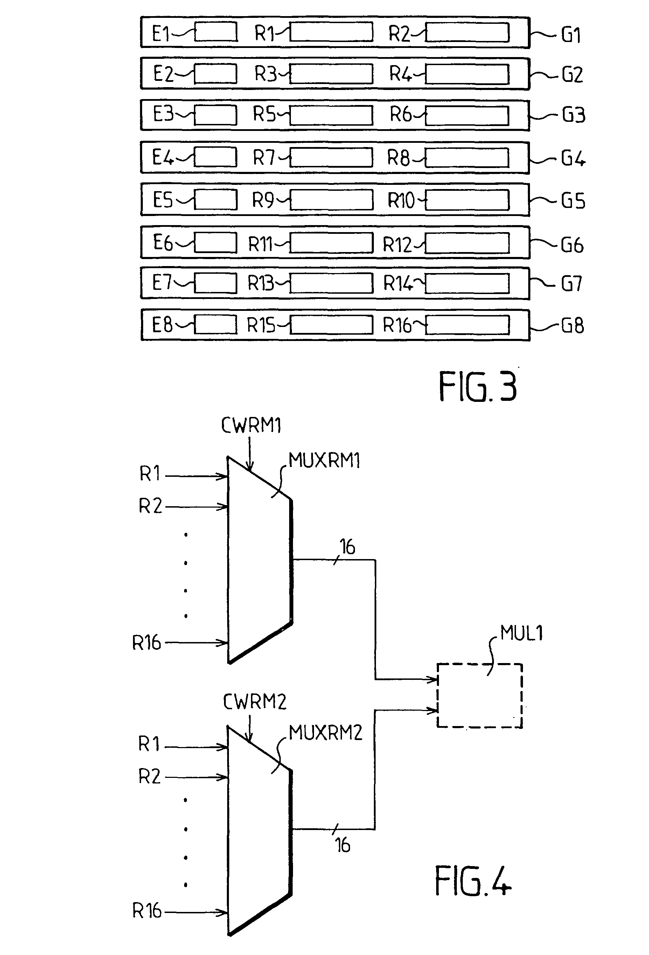

La Figure 3 illustre un ensemble d'éléments de stockage qui font partie du circuit de stockage et de sélection de données [IDSS] . L'ensemble comprend 16 registres de 16 bits numérotés du premier au seizième [R1-R16] et 8 registres d'extension de 8 bits numérotés du premier au huitième [E1-E8]. Le premier et le deuxième registre [R1, R2] et le premier registre d'extension [E1] forment un premier groupe de registre [G1]. Le troisième et le quatrième registre [R3, R4] et le deuxième registre d'extension [E2] forment un deuxième groupe de registre [G2], et ainsi de suite. Ainsi, il y a huit groupes de registres numérotés du premier au huitième [G1-G8]. Un groupe de registre [G] est à même de stocker une donnée de 40 bits. Les bits de poids faible (0-15) sont stockés dans le registre du groupe ayant le numéro supérieur. Les bits de poids fort (16-31) sont stockés dans le registre du groupe ayant le numéro inférieur. Les bits d'extension (32-39) sont stockés dans le registre d'extension. Le numéro entre parenthèses indique le poids des bits, 0 représentant le poids le plus faible et 39 le poids le plus fort.

La Figure 4 illustre deux multiplexeurs registres/multiplicateur [MUXRM] associés au premier multiplicateur [MUL1], Les multiplexeurs registres/multiplicateur [MUXRM] font partie du circuit de stockage et de sélection de données [IDSS]. Un premier multiplexeur registres/multiplicateur [MUXRM1] relie un des registres [R] illustré à la Figure 3 à une première entrée du premier multiplicateur [MUL1] en fonction d'un premier mot de contrôle registres/multiplicateur [CWRM1]. Par conséquent, le premier mot de contrôle registres/multiplicateur [CWRM1] détermine le registre [R] qui appliquera une donnée de 16 bits à la première entrée du premier multiplicateur [MUL1]. Un deuxième multiplexeur registres/multiplicateur [MUXRM2] relie un des registres [R] illustré à la Figure 3 à une deuxième entrée du premier multiplicateur [MUL1] en fonction d'un deuxième mot de contrôle de registres/multiplicateur [CWRM2]. Par conséquent, le deuxième mot de contrôle de registres/multiplicateur [CWRM2] détermine le registre [R] qui appliquera une donnée de 16 bits à la deuxième entrée du premier multiplicateur [MUL1]. Le circuit de stockage et de sélection de données [IDSS] comprend deux autres multiplexeurs registre/multiplicateur pour le deuxième multiplicateur [MUL2] illustrée à la Figure 2. Ils fonctionnent de la même façon.

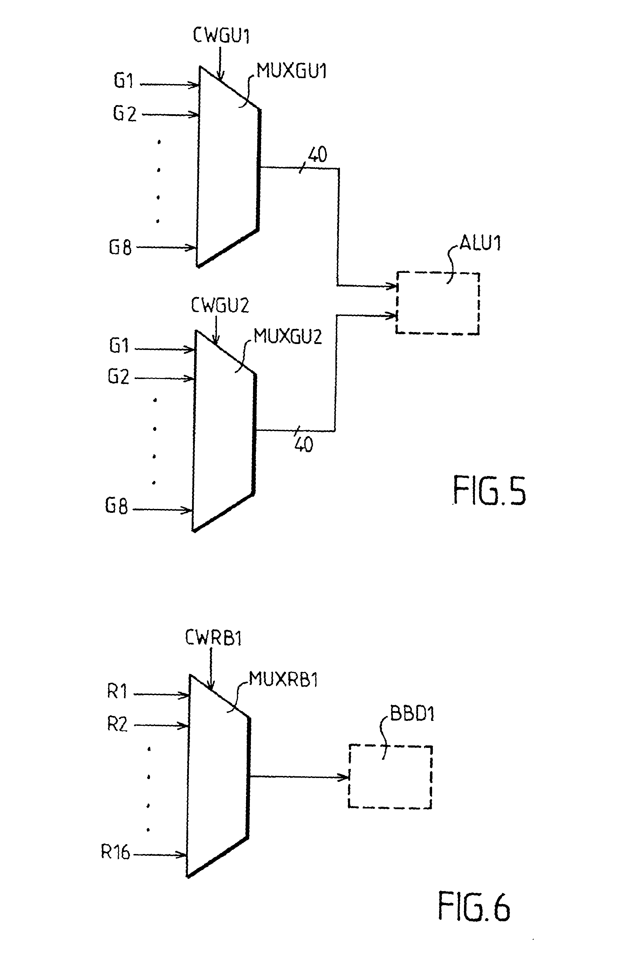

La Figure 5 illustre deux multiplexeurs groupes/unité [MUXGU] associés à la première unité arithmétique et logique [ALU1]. Les multiplexeurs groupes/unité [MUXGU] font partie du circuit de stockage et de sélection de données [IDSS]. Un premier multiplexeur groupes/unité [MUXGU1] relie un des groupes de registres [G] illustrés à la Figure 3 à une première entrée de la première unité arithmétique et logique [ALU1] en fonction d'un premier mot de contrôle groupes/unité [CWGU1]. Par conséquent, le premier mot de contrôle groupes/unité [CWGU1] détermine le groupe de registres [G] qui appliquera une donnée de 40 bits à la première entrée de la première unité arithmétique et logique [ALU1]. Un deuxième multiplexeur groupes/unité [MUXGU2] relie un des groupes de registres [G] illustrés à la Figure 3 à une deuxième entrée de la première unité arithmétique et logique [ALU1] en fonction d'un deuxième mot de contrôle groupes/unité [CWGU2]. Par conséquent, le deuxième mot de contrôle groupes/unité [CWGU2] détermine le groupe de registres qui appliquera une donnée de 40 bits à la deuxième entrée de la première unité arithmétique et logique [ALU1]. Pour chaque groupe de registres, le registre du groupe ayant le numéro supérieur fournira les bits de poids faible (0-15), le registre du groupe ayant le numéro inférieur fournira les bits de poids fort (16-31) et le registre d'extension qui fournira des bits d'extension (32-39), s'il y en a. Le circuit de stockage et de sélection de données [IDSS] comprend deux autres multiplexeurs groupes/unité pour la deuxième unité arithmétique et logique [ALU2] illustrée à la Figure 2. Ils fonctionnent de la même façon.

La Figure 6 illustre un multiplexeur registre/bus [MUXRB1] pour le premier circuit de bus bidirectionnel [BBD1]. Le multiplexeur registre/bus [MUXRB1] fait partie du circuit de stockage et de sélection de données [IDSS]. Il relie un des registres illustrés à la Figure 3 au premier circuit de bus bidirectionnel [BBD1] en fonction d'un mot de contrôle registre/bus [CWRB1]. Par conséquent, le mot de contrôle registre/bus [CWRB1] détermine le registre qui appliquera une donnée de 16 bits au premier circuit de bus bidirectionnel [BBD1]. Le circuit de stockage et de sélection de données [IDSS] comprend trois autres multiplexeurs registre/bus pour les trois autres circuits de bus bidirectionnel [BBD2, BBD3, BBD4] illustrés à la Figure 2.

La Figure 7 illustre un multiplexeur circuits/registre [MUXCR1] pour le premier registre [R1]. Le multiplexeur circuits/registre [MUXCR1] fait partie du circuit de stockage et de sélection de données [IDSS]. Il relie un circuit parmi plusieurs circuits au premier registre [R1] illustré à la Figure 3 en fonction d'un mot de contrôle circuits/registre [CWCR1]. Par conséquent, le mot de contrôle registre/bus [CWCR1] détermine le circuit qui appliquera un groupe de 16 bits au premier registre [R1]. Les circuits concernés sont: les circuits de bus bidirectionnel [BBD], les multiplicateurs [MUL] et les unités arithmétique et logique [ALU]. En ce qui concerne les multiplicateurs [MUL] et les unités arithmétique et logique [ALU], le groupe de 16 bits appliqué au premier registre [R1] sera les bits de poids fort (16-31). Les bits de poids faible (0-15) de cette donnée seront appliqués au deuxième registre [R2] au moyen d'un autre multiplexeur circuits/registre. Les éventuels bits d'extension (32-39) de la donnée seront appliqués au premier registre d'extension [E1] au moyen d'un multiplexeur circuits/extension. Le circuit de stockage et de sélection de données [IDSS] comprend donc 16 multiplexeurs circuits/registre, un pour chaque registre illustré à la Figure 3, et 8 multiplexeurs circuits/extension, un pour chaque registre d'extension illustré à la Figure 3.

La Figure 8 illustre le multiplexeur circuits/extension [MUXCE1] pour le premier registre d'extension [E1] déjà mentionné dans le paragraphe précédent. Le multiplexeur circuits/extension [MUXCE1] relie un des multiplicateurs [MUL] ou une des unités arithmétique et logique [ALU] au premier registre d'extension [E1] illustré à la Figure 3 en fonction d'un mot de contrôle circuits/extension [CWCE1]. Par conséquent, le mot de contrôle circuits/extension [CWCE1] détermine le multiplicateur [MUL] ou l'unité arithmétique et logique [ALU] qui appliquera 8 bits d'extension (32-39) au premier registre d'extensions [E1]. Les autres multiplexeurs circuits/extension du circuit de stockage et de sélection de données [IDSS] fonctionnent de la même façon.

La Figure 9 illustre une instruction [INSTR] pour le processeur de signaux numériques [DSP]. L'instruction comprend quatre champs: un champ de circuit [FLDC], un champ de première source [FLDS1], un champ de deuxième source [FLDS2] et un champ de destination [FLDD]. Le champ de circuit [FLDC] indique un des multiplicateurs [MUL] ou une des unités arithmétique et logique [ALU] illustrées à la Figure 2. S'il y s'agit d'un multiplicateur, le champ de première source [FLDS1] et le champ de deuxième source [FLDS2] indiquent chacun un registre dont le contenu sera respectivement appliqué à une première et deuxième entrée du multiplicateur. S'il y s'agit d'une unité arithmétique et logique, le champ de première source [FLDS1] et le champ de deuxième source [FLDS2] indiquent chacun un groupe de registres dont le contenu sera respectivement appliqué à une première et deuxième entrée de l'unité arithmétique et logique. Le champ de destination [FLDD] indique un groupe de registres dans lequel sera écrit le résultat fourni par le multiplicateur ou l'unité arithmétique et logique.

Il a déjà été expliqué que le circuit de contrôle [CPU] génère des mots de contrôle pour différents circuits à partir d'une instruction. Par exemple, supposons que le contenu de l'instruction est comme illustré à la Figure 9. Cela veut dire que le champ de circuit [FLDC], le champ de première source [FLDS1], le champ de deuxième source [FLDS2] et le champ de destination [FLDD] indiquent respectivement le premier multiplicateur [MUL1], le premier registre [R1], le cinquième registre [R5], et le septième groupe de registres [G7]. Dans ce cas, le circuit de contrôle [CPU] génèrera des mots de contrôle: (1) pour les multiplexeurs registres/multiplicateur associé au premier multiplicateur [MUL1], (2) pour les multiplexeurs circuits/registre associés respectivement aux treizième et quatorzième registres [R13, R14], et (3) pour le multiplexeur circuits/extension associé au septième registre d'extension [E7]. Ces registres sont illustrés à la Figure 3 et font partie du septième groupe de registres [G7].

Le mot de contrôle pour le premier multiplexeur registres/multiplicateur associé au premier multiplicateur [MUL1] aura pour effet que le premier registre [R1] sera connecté à la première entrée du premier multiplicateur [MUL1]. Le mot de contrôle pour le deuxième multiplexeur registres/multiplicateur aura pour effet que le cinquième registre [R5] sera connecté à la deuxième entrée du premier multiplicateur [MUL1]. Le mot de contrôle pour le multiplexeur circuits/registre associé au treizième registre [R13] aura pour effet qu'une sortie du premier multiplicateur [MUL1] comportant des bits de poids fort (16-31) sera connectée au treizième registre [R13]. Le mot de contrôle pour le multiplexeur circuits/registres associé au quatorzième registre [R14] aura pour effet qu'une sortie du premier multiplicateur [MUL1] comportant des bits de poids faible (0-15) sera connectée au quatorzième registre [R14]. Le mot de contrôle pour le multiplexeur circuits/extension associé au septième registre d'extension [E7] aura pour effet qu'une sortie du premier multiplicateur [MUL1] comportant des bits d'extension (32-39) sera connectée au septième registre d'extension [E7].

Il y a une différence principale entre les instructions concernant les multiplicateurs et celles concernant les unités arithmétique et logique. Les champs de sources [FLDS1, FLDS2] d'une instruction concernant un multiplicateur désignent des registres comme dans l'exemple illustré à la Figure 9 et décrit précédemment. En revanche, les champs de sources [FLDS1, FLDS2] d'une instruction concernant une unité arithmétique et logique désignent des groupes de registres. En réponse à une telle instruction, le circuit de contrôle généra des mots de contrôle pour les multiplexeurs groupes/unité associés à l'unité arithmétique et logique concernée. Ceci aura pour effet que chaque entrée de l'unité arithmétique et logique concernée sera reliée à un groupe de registres [G] illustrées à la Figure 3.

La génération de mots de contrôle telle que décrit précédemment peut se faire, par exemple, au moyen de circuits logiques ou d'un tableau sous forme de mémoire ou d'une combinaison des deux. La relation entre les valeurs respectives des champs d'instructions décrits précédemment et des mots de contrôle à appliquer aux circuits est prédéterminée. Cette relation peut être décrite au moyen d'un ou plusieurs tableaux logiques. Il existe de nombreuses façons de concevoir des circuits logiques implémentant ces tableaux logiques.

Il a déjà été expliqué que le circuit de contrôle [CPU] lit des instructions de la mémoire de programme [PMEM] illustrée à la Figure 2. Ceci peut se faire d'une façon classique, par exemple, au moyen d'un compteur de programme (en anglais: program counter). La lecture d'instructions et l'exécution de ceiles-ci peut être interrompue ou redémarrée respectivement au moyen d'un signal d'interruption ou de remise à zéro (en anglais: reset).

Il y a plusieurs façon d'écrire les instructions dans la mémoire de programme [PMEM]. Par exemple, cette mémoire peut être du type "en lecture seule". Dans ce cas, le fabricant de la mémoire écrira les instructions dans celle-ci. La mémoire de programme [PMEM] peut également être du type "enregistrable". Dans ce cas, il suffira d'avoir accès à un support contenant des instructions afin de les écrire dans la mémoire de programme [PMEM]. Un tel accès peut être établi au moyen d'un réseau de communication comme, par exemple, l'Internet.

Le processeur de signaux numériques illustré à la Figure 2 est à même de multiplier deux données de 32 bits en effectuant quatre multiplications. Les bits de poids faible (15-0) d'une première donnée de 32 bits sont multipliés par les bits de poids faible (15-0) d'une deuxième donnée. Les bits de poids fort (16-31) de la première donnée de 32 bits sont multipliés par les bits de poids faible (15-0) de la deuxième donnée. Les bits de poids faible (15-0) de la première donnée de 32 bits sont multipliés par les bits de poids fort (16-31) de la deuxième donnée. Les bits de poids fort (16-31) de la première donnée de 32 bits sont multipliés par les bits de poids fort (16-31) de la deuxième donnée. Les résultats de ces quatre multiplications sont additionnés. Ainsi on obtient le produit des deux données.

Le processeur de signaux numériques [DSP] illustré aux Figures 2-9 est un exemple d'une application des caractéristiques illustrées à la Figure 1. Les circuits de traitement [PRC1, PRC2] illustrés à la Figure 1 prennent respectivement la forme d'un multiplicateur [MUL] et une unité arithmétique et logique [ALU], illustrés à la Figure 2. Le circuit de sélection étroite [SELN] illustré à la Figure 1 prend la forme d'un multiplexeur registres/multiplicateur [MUXRM] illustré à la Figure 4. Le circuit de sélection large [SELW] illustré à la Figure 1 prend la forme d'un multiplexeur groupes/unité [MUXGU] illustré à la Figure 5.

La description ci-dessus en référence aux Figures illustre l'invention plutôt que la limite. Il est évident qu'il existe de nombreuses alternatives qui rentrent dans la portée des revendications ci-jointes. A cet égard, quelques remarques sont faites en conclusion.

Les caractéristiques illustrées à la Figure 1 peuvent être appliquées dans nombreux produits et procédés. La Figure 2 illustre seulement une application possible qui concerne un processeur de signaux numériques. Il est également possible d'appliquer les caractéristiques illustrées à la Figure 1, par exemple, dans un ordinateur.

Il y a de nombreuses manières pour implémenter un ensemble d'éléments de stockage selon l'invention. La Figure 3 illustre seulement une implémentation possible dans laquelle 2 registres de 16 bits et 1 registre de 8 bits peuvent, en effet, former un registre de 40 bits. Il est également possible d'utiliser, par exemple, des registres à 8 bits exclusivement qui peuvent, en effet, former un registre de 16 bits ou un registre à 40 bits. Faisant référence à la Figure 3, le nombre d'éléments de stockage dans la dimension horizontale (ligne) ou la dimension verticale (colonne), ainsi que les tailles des éléments de stockage, peuvent varier selon le type d'application.

Il existe de nombreuses manières pour implémenter des fonctions au moyen d'articles physiques (en anglais: items of hardware) ou de logiciel (en anglais: software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou ces étapes.

## Revendications

1. Un dispositif de traitement de données comprenant:
- une pluralité de circuits de traitement [PRC]; et
- un ensemble d'éléments de stockage [SE] pour stocker temporairement des données destinées aux circuits de traitement [PRC],
**caractérisé en ce que** le dispositif comprend:
- un premier multiplexeur [SELN] disposé entre l'ensemble d'éléments de stockage [SE] et un premier circuit de traitement [PRC1], le premier multiplexeur [SELN] étant agencé pour sélectionner un seul élément de stockage [SE(i,1)] parmi plusieurs éléments de stockage [SE(1,1), SE(1,2),... SE(N,1), SE(N,2)] afin d'appliquer le contenu de l'élément de stockage sélectionné [SE(i,1)] à une entrée du premier circuit de traitement [PRC1];
- un second multiplexeur [SELW] disposé entre l'ensemble d'éléments de stockage [SE] et un second circuit de traitement [PRC2], le second multiplexeur [SELW] étant agencé pour sélectionner un groupe d'éléments de stockage [GRP(j)] parmi plusieurs groupes d'éléments de stockage disjoints [GRP(1)-GRP(N)] afin d'appliquer une concaténation des contenus des éléments de stockage [SE] faisant partie du groupe sélectionné [GRP(j)] à une entrée du second circuit de traitement [PRC2].

2. Méthode de traitement de données au moyen d'un dispositif de traitement de données comprenant:
- une pluralité de circuits de traitement [PRC];
- un ensemble d'éléments de stockage [SE] pour stocker temporairement des données destinées aux circuits de traitement [PRC],
- un premier multiplexeur [SELN] disposé entre l'ensemble d'éléments de stockage [SE] et un premier circuit de traitement [PRC1],
- un second multiplexeur [SELW] disposé entre l'ensemble d'éléments de stockage [SE] et un second circuit de traitement [PRC2],
**caractérisé en ce que** la méthode comprend les étapes suivantes:
- une étape de sélection étroite [SELN] pour sélectionner un seul élément de stockage [SE(i,1)] parmi plusieurs éléments de stockage [SE(1,1), SE(1,2),... SE(N,1), SE(N,2)] au moyen du premier multiplexeur [SELN] afin d'appliquer le contenu de l'élément de stockage sélectionné [SE(i,1)] à une entrée du premier circuit de traitement [PRC1];
- une étape de sélection large [SELW] pour sélectionner un groupe d'éléments de stockage [GRP(j)] parmi plusieurs groupes d'éléments de stockage disjoints [GRP(1)-GRP(N)] au moyen du second multiplexeur [SELW] afin d'appliquer une concaténation des contenus des éléments de stockage [SE] faisant partie du groupe sélectionné [GRP(j)] à une entrée du second circuit de traitement [PRC2].

3. Produit de programme d'ordinateur pour un dispositif de traitement de données comprenant:
- une pluralité de circuits de traitement [PRC];
- un ensemble d'éléments de stockage [SE] pour stocker temporairement des données destinées aux circuits de traitement [PRC],
- un premier multiplexeur [SELN] disposé entre l'ensemble d'éléments de stockage [SE] et un premier circuit de traitement [PRC1],
- un second multiplexeur [SELW] disposé entre l'ensemble d'éléments de stockage [SE] et un second circuit de traitement [PRC2],
**caractérisé en ce que** le produit de programme d'ordinateur comprend:
- un premier type d'instruction qui, quand il est exécuté par le dispositif de traitement de données, entraîne le premier multiplexeur [SELN] à sélectionner un seul élément de stockage [SE(i,1)] parmi plusieurs éléments de stockage [SE(1,1), SE(1,2),... SE(N,1), SE(N,2)] afin d'appliquer le contenu de l'élément de stockage sélectionné [SE(i,1)] à une entrée du premier circuit de traitement [PRC1]; et
- un deuxième type d'instruction qui, quand il est exécuté par le dispositif de traitement de données, entraîne le second multiplexeur [SELW] à sélectionner un groupe d'éléments de stockage [GRP(j)] parmi plusieurs groupes d'éléments de stockage disjoints [GRP(1)-GRP(N)] afin d'appliquer une concaténation des contenus des éléments de stockage [SE] faisant partie du groupe sélectionné [GRP(j)] à une entrée du second circuit de traitement [PRC2].

## Claims

1. A data processing device comprising:
- a plurality of processing circuits [PRC]; and
- a group of storage elements [SE] for the temporary storage of data intended for the processing circuits [PRC],
**characterized in that** the device comprises:
- a first multiplexer [SELN] located between the group of storage elements [SE] and a first processing circuit [PRC1], the first multiplexer [SELN] being arranged for selecting a single storage element [SE(i,1)] from a plurality of storage elements [SE(1,1), SE(1,2), ... SE(N,1), SE(N,2)] in order to apply the contents of the selected storage element [SE(i,1)] to an input of a processing circuit [PRC1];
- a second multiplexer [SELW] located between the group of storage elements [SE] and a second processing circuit [PRC2], the second multiplexer [SELW] being arranged for selecting a group of storage elements [GRP(j)] from a plurality of separate groups of storage elements [GRP(1)-GRP(N)] in order to apply a concatenation of the contents of the storage elements [SE] forming part of the selected group [GRP(j)] to an input of the second processing circuit [PRC2].

2. A method of data processing by means of data processing device comprising:
- a plurality of processing circuits [PRC]; and
- a group of storage elements [SE] for the temporary storage of data intended for the processing circuits [PRC],
- a first multiplexer [SELN] located between the group of storage elements [SE] and a first processing circuit [PRC1],
- a second multiplexer [SELW] located between the group of storage elements [SE] and a second processing circuit [PRC2],
**characterized in that** the method comprises the following steps:
- a narrow selection step [SELN] for selecting a single storage element [SE(i,1)] from a plurality of storage elements [SE(1,1), SE(1,2), ... SE(N,1), SE(N,2)] by means of the first multiplexer [SELN] in order to apply the contentsof the selected storage element [SE(i,1)] to an input of the first processing circuit [PRC1];
- a wide selection step [SELW] for selecting a group of storage elements [GRP(j)] from a plurality of separate groups of storage elements [GRP(1)-GRP(N)] by means of the second multiplexer [SELW] in order to apply a concatenation of the contents of the storage elements [SE] forming part of the selected group [GRP(j)] to an input of the second processing circuit [PRC2].

3. A computer program product for a data processing device comprising;
- a plurality of processing circuits [PRC]; and
- a group of storage elements [SE] for the temporary storage of data intended for the processing circuits [PRC],
- a first multiplexer [SELN] located between the group of storage elements [SE] and a first processing circuit [PRC1],
- a second multiplexer [SELW] located between the group of storage elements [SE] and a second processing circuit [PRC2],
**characterized in that** the computer program product comprises:
- a first type of instruction which, when it is executed by the data processing device, causes the first multiplexer [SELN] to select a single storage element [SE(i, 1)] from a plurality of storage elements [SE(1,1), SE(1,2), ... SE(N,1), SE(N,2)] in order to apply the contents of the selected storage element [SE(i,1)] to an input of the first processing circuit [PRC1]; and
- a second type of instruction which, when it is executed by the data processing device, causes the second multiplexer [SELW] to select a group of storage elements [GRP(j)] from a plurality of separate groups of storage elements [GRP(1)-GRP(N)] in order to apply a concatenation of the contents of the storage elements [SE] forming part of the selected group [GRP(j)] to an input of the second processing circuit [PRC2].

## Patentansprüche

1. Datenverarbeitungsgerät, das Folgendes umfasst:
- mehrere Verarbeitungsschaltungen [PRC]; und
- einen Satz von Speicherelementen [SE] zum vorübergehenden Speichern der für die Verarbeitungsschaltungen [PRC] bestimmten Daten;
**dadurch gekennzeichnet, dass** das Gerät Folgendes umfasst:
- einen ersten Multiplexer [SELN], der zwischen dem Satz von Speicherelementen [SE] und einer ersten Verarbeitungsschaltung [PRC 1] angeordnet ist, wobei der erste Multiplexer [SELN] eingerichtet ist, um ein einziges Speicherelement [SE(i,1)] unter mehreren Speicherelementen [SE(1,1), SE(1,2),... SE(N, 1), SE(N,2)] auszuwählen, um den Inhalt des ausgewählten Speicherelements [SE(i,1)] an einen Eingang der ersten Verarbeitungsschaltung [PRC 1] anzulegen;
- einen zweiten Multiplexer (SELW), der zwischen dem Satz von Speicherelementen [SE] und einer zweiten Verarbeitungsschaltung [PRC2] angeordnet ist, wobei der zweite Multiplexer [SELW] eingerichtet ist, um eine Gruppe von Speicherelementen [GRP(j)] unter mehreren Gruppen von getrennten Speicherelementen [GRP(1) bis GRP(N)] auszuwählen, um eine Verkettung der Inhalte der Speicherelemente [SE], die einen Teil einer ausgewählten Gruppe [GRP(j)] bilden, an einen Eingang der zweiten Verarbeitungsschaltung [PRC2] anzulegen.

2. Verfahren zum Verarbeiten von Daten mit Hilfe eines Datenverarbeitungsgeräts, das Folgendes umfasst:
- mehrere Verarbeitungsschaltungen [PRC]; und
- einen Satz von Speicherelementen [SE] zum vorübergehenden Speichern der für die Verarbeitungsschaltungen [PRC] bestimmten Daten;
- einen ersten Multiplexer [SELN], der zwischen dem Satz von Speicherelementen [SE] und einer ersten Verarbeitungsschaltung [PRC 1] angeordnet ist,
- einen zweiten Multiplexer (SELW), der zwischen dem Satz von Speicherelementen [SE] und einer zweiten Verarbeitungsschaltung [PRC2] angeordnet ist,
**dadurch gekennzeichnet, dass** das Verfahren die folgenden Schritte umfasst:
- einen engen Auswahlschritt [SELN] zum Auswählen eines einzigen Speicherelements [SE(i,1)] unter mehreren Speicherelementen [SE(1,1), SE(1,2),... SE(N,1), SE(N,2)] mit Hilfe eines ersten Multiplexers [SELN], um den Inhalt des ausgewählten Speicherelements [SE(i,1)] an einen Eingang der ersten Verarbeitungsschaltung [PRC1] anzulegen;
- einen breiten Auswahlschritt [SELW] zum Auswählen einer Gruppe von Speicherelementen [GRP(j)] unter mehreren Gruppen von getrennten Speicherelementen [GRP(1) bis GRP(N)] mit Hilfe eines zweiten Multiplexers [SELW], um eine Verkettung der Inhalte der Speicherelemente [SE], die einen Teil einer ausgewählten Gruppe [GRP(j)] bilden, an einen Eingang der zweiten Verarbeitungsschaltung [PRC2] anzulegen.

3. Computerprogrammprodukt für ein Datenverarbeitungsgerät, das Folgendes umfasst:
- mehrere Verarbeitungsschaltungen [PRC];
- einen Satz von Speicherelementen [SE] zum vorübergehenden Speichern der für die Verarbeitungsschaltungen [PRC] bestimmten Daten;
- einen ersten Multiplexer [SELN], der zwischen dem Satz von Speicherelementen [SE] und einer ersten Verarbeitungsschaltung [PRC1] angeordnet ist,
- einen zweiten Multiplexer (SELW), der zwischen dem Satz von Speicherelementen [SE] und einer zweiten Verarbeitungsschaltung [PRC2] angeordnet ist,
**dadurch gekennzeichnet, dass** das Computerprogrammprodukt Folgendes umfasst:
- einen ersten Befehlstyp, der, wenn er durch das Datenverarbeitungsgerät ausgeführt wird, bewirkt, dass der erste Multiplexer [SELN] ein einziges Speicherelement unter mehreren Speicherelementen [SE(1,1), SE(1,2),... SE(N,1), SE(N,2)] auswählt, um den Inhalt des ausgewählten Speicherelements [SE(i, 1)] an einen Eingang der ersten Verarbeitungsschaltung [PRC1] anzulegen; und
- einen zweiten Befehlstyp, der, wenn er durch das Datenverarbeitungserät ausgeführt wird, bewirkt, dass der zweite Multiplexer [SELW] eine Gruppe von Speicherelementen [GRP(j)] unter mehreren Gruppen von getrennten Speicherelementen [GRP(1) bis GRP(N)] auswählt, um eine Verkettung der Inhalte der Speicherelemente [SE], die einen Teil einer ausgewählten Gruppe [GRP(j)] bilden, an einen Eingang der zweiten Verarbeitungsschaltung [PRC2] anzulegen.
